(19)

Europäisches
Patentamt
European
Patent Office
Office européen
des brevets

(11)  EP 2 747 303 A1

(12)  EUROPEAN PATENT APPLICATION

(43) Date of publication:
25.06.2014 Bulletin 2014/26

(51) Int Cl.:
H04B 7/04 (2006.01)          H04B 7/06 (2006.01)

(21) Application number: 13178626.1

(22) Date of filing: 30.07.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.12.2012  US 201261745724 P
24.07.2013  US 201313950267

(71) Applicant: Industrial Technology Research
Institute
Hsinchu 31040 Taiwan (TW)

(72) Inventors:
• Hsu, Chao-Yuan
24259 New Taipei City (TW)
• Guey, Jiann-Ching
30071 Hsinchu City (TW)
• Tsai, Tzu-Jane
30264 Hsinchu County (TW)

(74) Representative: Gee, Steven William
D.W. & S.W. GEE
1 South Lynn Gardens
London Road
Shipston on Stour
Warwickshire CV36 4ER (GB)

(54)  **Method and apparatus with antenna selection in a communication system**

(57)  According to an exemplary embodiment, a method with antenna selection in a communication system may support an antenna selection function at a central node having a plurality of antennas; and coschedule multiple distributed nodes to the same resource in a downlink channel from the central node to the multiple distributed nodes by using multiple precoders related to the multiple distributed nodes to provide a system performance gain; wherein the multiple precoders are under one of conditions of partially overlapped antenna selection, non-overlapped antenna selection, and fully overlapped antenna selection.

FIG. 1

EP 2 747 303 A1

**Description**

CROSS-REFERENCE TO RELATED APPLICATION

The present application is based on, and claims priorities from, US Provisional Patent Application No. 61/745,724, filed December 24, 2012, and US Patent Application No. 13/950,267, filed July 24, 2013, respectively, the disclosure of which is hereby incorporated by reference herein in its entirety.

TECHNICAL FIELD

The disclosure generally relates to a method and an apparatus with antenna selection in a communication system.

BACKGROUND

The Multiple-Input Multiple-Output (MIMO) technique has the features to enhance the capacity of Single-Input Single-Output (SISO) systems. For an $N_R \times N_T$ MIMO system, the system capacity asymptotically linearly increases with a slope that is equal to the minimum of $N_R$ and $N_T$, where $N_R$ is the number of receive antennas and $N_T$ is the number of transmit antennas. In addition to the capacity gain, the MIMO technique also could provide the maximum diversity gain that is equal to $N_T \times N_R$. This technique is now entering the forth generation wireless cellular and wireless LAN products.

These MIMO gains are realizable when the receiver knows the MIMO wireless channel. If the transmitter knows the wireless MIMO channel, the system performance could be further improved by using some signal processing techniques. One of these techniques is precoding. Precoding is to transform the transmitted data before sending it through antennas. It could be classified as linear and non-linear precoding. Non-linear precoding techniques may include dirty paper coding (DPC), Tomlinson-Harashima precoding (THP), etc. Linear precoding transforms data by multiplying it with a precoding matrix to match the channel eigenmodes. Linear precoding is simple to be implemented in a system and its performance is also easier to be analyzed than that of non-linear precoding. For these reasons, linear precoding has been adopted in communication standards such as 3 GPP long term evolution (LTE) and LTE-advanced (LTE-A) and is expected to dominate the future implementation of telecommunications networks. Linear precoding could also be applied to enhance capacity, which is called interference alignment.

There are two kinds of linear precoding design approaches. One is the codebook-based precoding; the other is the non-codebook-based precoding. Basically, the non-codebook-based precoding has better performance than the codebook-based precoding since the non-codebook-based precoding requires instantaneous channel state information (CSI) to design the best precoder for the current transmission data. For a frequency division duplex (FDD) system, it needs extra bandwidth to feed back CSI from the receiver to the transmitter for performing downlink (DL) precoding since the downlink and uplink (UL) channels are allocated in different frequency bands. In this way, the feedback overhead of CSI is high if full channel information is needed to be fed back to the transmitter.

Codebook-based precoding could reduce the feedback overhead compared to the full CSI feedback. It is a trade-off between performance and feedback overhead. The optimum codebook-based approach basically follows the guideline of Grassmannian packing. The codebook design is irrelevant to instantaneous wireless channels. The codebook is designed by maximizing the minimum distance of any two code words (i.e. precoders) in a codebook. Owing to this kind of CSI-independent design, it may not need to feed back the full instantaneous channel. Since the codebook is designed regardless of instantaneous channels, it could be designed off-line and stored in both the transmitters and receivers. Accordingly, the receiver only feeds back the precoding matrix indicator (PMI) in a codebook to indicate which precoder the transmitter should use. Since the performance of codebook-based precoding is limited by the pre-designed codebook, some works have focused on adaptive codebook design to further improve the system performance. These works may adapt the codebook to improve the system performance based on channel statistics such as channel spatial correlation and channel temporal correlation. Extra information of channel statistics is fed back to transmitters to update the current codebook. Thus, extra computing power is also required to perform the codebook update. The codebook could be changed according to the antenna settings such as uncorrelated or diversity setting, cross-polarized setting, and uniform linear array setting. These above-mentioned methods are different from the approach in the Standard LTE-A which uses a fixed codebook under a certain configuration.

The concept and techniques for a very large MIMO system have been proposed and studied. Beamforming with a larger number of antennas could focus the transmit power on a small area. Thus, the received signal quality could be enhanced by this approach. From another viewpoint, the transmitted power could be reduced based on a certain system performance requirement. So this technique could be an energy-saving method. On technique uses a multi-resolution codebook to provide quantization for channel related information in a wireless network that supports both single-user MIMO (SU-MIMO) and multi-user MIMO (MU-MIMO). Precoding with fully overlapped antennas is used in this technique. Precoding with fully overlapped antennas is also used in another technique for operating a MU wireless communication system that supports MU-MIMO communications between a base station and multiple mobile stations.

Massive MIMO has also been mentioned in 3GPP Workshop on Release 12 and onwards. And, the Massive MIMO technique plays an important role in the following 3GPP meetings. Since the end devices such as smart phones and tablets has more powerful capability, the data traffic increases drastically. This would have much impact on the current network. To support the large data traffic, small cell deployment is a solution to enhance the system capacity. And it is the current issue in 3GPP meetings.

## SUMMARY

The exemplary embodiments of the present disclosure may provide a method and an apparatus with antenna selection in a communication system.

One exemplary embodiment relates to a method with antenna selection in a communication system having multiple distributed nodes and a central node equipped with a plurality of antennas. The method may comprise: supporting an antenna selection scheme from the plurality of antennas at the central node; and co-scheduling the multiple distributed nodes to a same resource in a downlink channel from the central node to multiple co-scheduled distributed nodes by using multiple precoders related to the multiple co-scheduled distributed nodes to provide a performance gain; wherein the method further includes a precoder design and a corresponding signaling procedure to complete an assignment of the multiple precoders for the multiple co-scheduled distributed nodes, and the precoder design is based on one of conditions, partially overlapped antenna selection, non-overlapped antenna selection, and fully overlapped antenna selection.

Another exemplary embodiment relates to a central node supporting an antenna selection function in a communication system, and equipped with a plurality of antennas. The central node may comprise a transceiver circuit for transmitting and receiving a plurality of signals to and from multiple distributed nodes, a converter configured to perform a format conversion between one or more digital signals and one or more analog signals from the multiple distributed nodes to the central node or from the central node to the multiple distributed nodes, and a processing circuit that determines multiple priorities of the multiple distributed nodes, and assigns an overlapped part of each of multiple precoders of the multiple distributed nodes when the overlapped part is decided at the central node.

Yet another exemplary embodiment relates to a distributed node with an antenna selection mechanism in a communication system, and equipped with a plurality of antennas. The distributed node may comprise a transceiver circuit for transmitting and receiving a plurality of signals to and from a central node, a converter configured to perform a format conversion between one or more digital signals and one or more analog signals from the distributed node to the central node or from the central node to the distributed node, and a processing circuit that determines a non-overlapped part of a precoder for the distributed node, and receives or transmits one or more signals related to determining the precoder.

The foregoing and other features of the exemplary embodiments will become better understood from a careful reading of detailed description provided herein below with appropriate reference to the accompanying drawings.

## BRIEF DESCRIPTION OF THE DRAWINGS

FIG. 1 shows an exemplary schematic view illustrating a scenario of a wireless back with massive antennas, according to an exemplary embodiment.

FIG. 2 shows an exemplary schematic view illustrating that multiple distributed nodes are co-scheduled to the same resource, according to an exemplary embodiment.

FIG. 3A and FIG. 3B show two examples of precoding matrices for two co-scheduled distributed nodes, using the DFT matrices and Hadamard matrices, respectively, according to an exemplary embodiment.

FIG. 4 shows an example for feedback coefficients of the non-overlapped part of the precoding matrices, according to an exemplary embodiment.

FIG. 5 shows a method with antenna selection in a communication system, according to an exemplary embodiment.

FIG. 6 shows the related signaling and the procedure for determining the precoders of all co-scheduled distributed nodes, according to a first exemplary embodiment.

FIG. 7 shows the related signaling and the procedure for determining the precoders of all co-scheduled distributed nodes, according to a second exemplary embodiment.

FIG. 8 shows the related signaling and the procedure for determining the precoders of all co-scheduled distributed nodes, according to a third exemplary embodiment.

FIG. 9 shows a central node supporting an antenna selection function in a communication system, and equipped with a plurality of antennas, according to an exemplary embodiment.

FIG. 10 shows a distributed node with an antenna selection mechanism in a communication system, and equipped with a plurality of antennas, according to an exemplary embodiment.

## DETAILED DESCRIPTION OF THE EXEMPLARY EMBODIMENTS

Below, exemplary embodiments will be described in detail with reference to accompanied drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

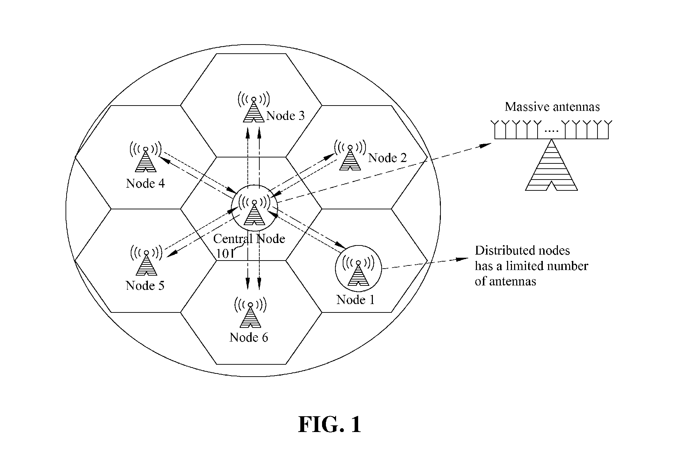

The disclosed exemplary embodiments may provide a transmit method in a communication system. One of possible scenarios is depicted in FIG. 1. As shown in FIG. 1, this scenario involves several distributed nodes (small cells) indexed as node 1, node 2, node 3, and so on, and a central node 101. The central node 101 is equipped with massive antennas and other distributed nodes may have a limited number of antennas compared to that in the central node 101. The communication between the central node 101 and other distributed nodes are wireless. We may call it wireless backhaul. One of the merits in wireless backhaul is easy deployment of small cells since it is not necessary to deploy a fixed wired-line between the central node and a distributed node. According to the disclosed exemplary embodiments, it may deploy a small cell in any place and move it to another place if needed.

In a small-cell wireless backhaul, the disclosed exemplary embodiments of a method in a communication system with massive antennas may use antenna selection and precoding to increase the system capacity. For example, the antenna subsets in the central node related to the co-scheduled distributed nodes in this communication system may be different, where each co-scheduled distributed node has its corresponding antenna subset. Thus the antenna selection in the central node may provide the diversity gain. The precoders of co-scheduled distributed nodes may be partially overlapped, and the Multi-User Interference (MUI) may be eliminated partially (MUI-limited) or completely (i.e. MUI-free). In other words, a system with massive antennas may support antenna selection to obtain the diversity gain, thereby increasing the system capacity, wherein assume the antenna selection operation has been completed before determining the precoders for all co-scheduled distributed nodes. Spectral efficiency may be enhanced since multiple distributed nodes are co-scheduled to the same resource. When the antenna subsets of all co-scheduled distributed nodes are partially overlapped, there are some constraints on the precoder design. The disclosed exemplary embodiments may provide a method about how to determine the precoders related to all co-scheduled distributed nodes to control or avoid interference in a distributed node coming from other distributed nodes.

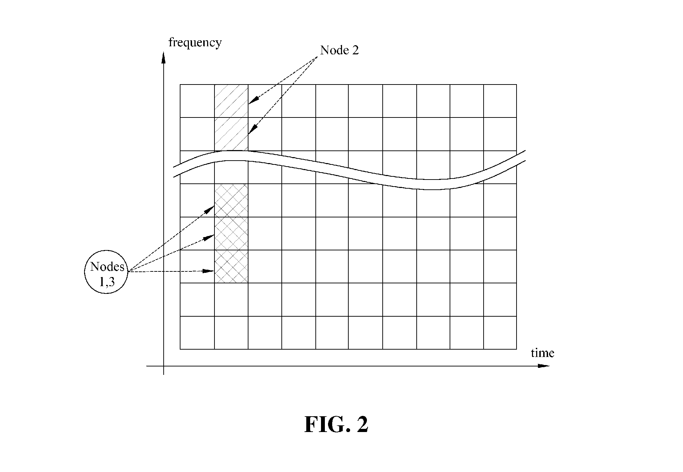

One of the possible scenarios for the precoding method in a communication system is in wireless backhaul with massive antennas, such as FIG. 1. In this scenario of wireless backhaul with massive antennas, a communication system may have the central node 101 denoted as donor eNB (DeNB) and several other distributed nodes (small cells). The central node 101 has larger coverage and other distributed nodes have smaller coverage. The communication system may operate in an outband or inband frequency, where an outband frequency means that the operating frequency in wireless backhaul is different from the UEs' access link frequency and an inband frequency means that the operating frequency in wireless backhaul is the same as the UEs' access link frequency. The antennas in the central node are indexed from 1 to N, denoted as $\mathbf{s} = \{1,2,...,N\}$, where $N \geq 2$. To increase the system capacity, the central node 101 may schedule several distributed nodes to the same resource in the downlink channel from the central node to the several distributed nodes, where the same resource means the same time-frequency grid, as shown in FIG. 2. Thus, the central node 101 may transmit multiple nodes' data in the same resource. Since the central node has massive antennas, it is possible that the co-scheduled distributed nodes have different antenna subsets in the downlink, where an antenna subset includes the antenna indices used for a distributed node.

Assume that node i has its own antenna subset $s_i$. There are 3 conditions for the relationship of the antenna subsets of the co-scheduled distributed nodes. The first is partially overlapped, the second is non-overlapped, and the third is fully overlapped. For example, if node 1 has the antenna subset $\mathbf{s}_1 = \{1,2,3,4,5\}$ and the antenna subset of node 2 is $\mathbf{s}_2 = \{2,3,4,5,6\}$, the relationship of $\mathbf{s}_1$ and $\mathbf{s}_2$ is partially overlapped and $\mathbf{s}_1 \cap \mathbf{s}_2 = \{2,3,4,5\}$. If node 1 has the antenna subset $\mathbf{s}_1 = \{1,2,3,4\}$ and the antenna subset of node 2 is $\mathbf{s}_2 = \{5,6,7,8\}$, the relationship of $\mathbf{s}_1$ and $\mathbf{s}_2$ is non-overlapped and $\mathbf{s}_1 \cap \mathbf{s}_2 = \varphi$. If node 1 has the antenna subset $\mathbf{s}_1 = \{1,2,3,4,5,6,7,8\}$ and the antenna subset of node 2 is $\mathbf{s}_2 = \{1,2,3,4,5,6,7,8\}$, the relationship of $\mathbf{s}_1$ and $\mathbf{s}_2$ is fully overlapped and $\mathbf{s}_1 \cap \mathbf{s}_2 = \{1,2,3,4,5,6,7,8\}$.

First, the first condition of the partial overlap is described and the following scenario is considered for easy explanation. The central node schedules 2 distributed nodes to the same resource in the downlink and the numbers of layers for node 1 and node 2 are two and one, respectively. The selected antennas subsets for node 1 and node 2 are $\mathbf{s}1 = \{1,2,3,4,5\}$ and $\mathbf{s}_2 = \{2,3,4,5,6\}$, respectively. The number of antennas at node 1 is $R_1$ and that of antennas at node 2 is $R_2$.

We assume that the number of antennas at node i is $R_i$, the number of used antennas at the central node for all co-scheduled distributed nodes is $N_T$ ($NT \leq N$), and the number of transmission layers for node i is $v_i$. Then the

received signal model in the kth subcarrier, k is the subcarrier index, at node i is expressed as follows:

$$\mathbf{r}_i = \mathbf{H}_i \cdot \left( \mathbf{A}\mathbf{x}_1 + \mathbf{B}\mathbf{x}_2 \right) + \mathbf{n}_i \quad (1)$$

where $\mathbf{r}_i$ is the received signal in the kth subcarrier at node i and the dimension of $r_i$ is $R_i \times 1$; the matrix A is the precoding matrix for node 1 and the dimension of $\mathbf{A}$ is $N_T \times v_1$; the matrix $\mathbf{B}$ is the precoding matrix for node 2 and the dimension of $\mathbf{B}$ is $N_T \times v_2$; $\mathbf{H}_i$ is the channel matrix from the central node to node i, and the dimension of $\mathbf{H}_i$ is $R_i \times N_T$; $\mathbf{n}_i$ is the additive white Gaussian noise (AWGN) at node i; $\mathbf{x}_1 = [x_{1,1}, x_{1,2}]^T$ is the data for node 1 sent from the central node, and the dimension of $\mathbf{x}_1 = [x_{1,1}, x_{1,2}]^T$ is $v_1 \times 1$; and $\mathbf{x}_2 = [x_{2,1}]$ is the data for node 2 sent from the central node, and the dimension of $\mathbf{x}_2 = [x_{2,1}]$ is $v_2 \times 1$. For example, the received kth subcarrier signal at node 1 may be expanded as the following equation:

$$\mathbf{r}_1 = \mathbf{H}_1 \left( \begin{bmatrix} a_{1,1} & a_{1,2} \\ a_{2,1} & a_{2,2} \\ a_{3,1} & a_{3,2} \\ a_{4,1} & a_{4,2} \\ a_{5,1} & a_{5,2} \\ 0 & 0 \end{bmatrix} \begin{bmatrix} x_{1,1} \\ x_{1,2} \end{bmatrix} + \begin{bmatrix} 0 \\ b_{2,1} \\ b_{3,1} \\ b_{4,1} \\ b_{5,1} \\ b_{6,1} \end{bmatrix} \begin{bmatrix} x_{2,1} \end{bmatrix} \right) + \mathbf{n}_1 \quad (2)$$

where $a_{i,j} = \mathbf{A}(i,j)$ and $b_{i,j} = \mathbf{B}(i,j)$. It may be seen from the equation (2) that the precoded data of node 1 and node 2 are partially transmitted from the antenna indices {2,3,4,5} simultaneously.

At the receiver of node 1, it may estimate the channel $\mathbf{H}_1$ from cell-specific reference signals (CRS) and perform channel equalization such as the Zero Forcing (ZF) method. When the channel estimate is prefect, the equalized received signal $\overline{\mathbf{r}}_1$ at node 1 becomes

$$\overline{\mathbf{r}}_1 = \mathbf{H}_1^{-1}\mathbf{r}_1 = \mathbf{A}\mathbf{x}_1 + \mathbf{B}\mathbf{x}_2 + \mathbf{H}_1^{-1}\mathbf{n}_1 .$$

Then it may eliminate the effect of precoding to obtain the transmit data $\mathbf{x}_1$. If the precoding matrix $\mathbf{A}$ is orthogonal ($\mathbf{A}\mathbf{A}^H = \alpha\mathbf{I}$), the resulting decoded signal may be expressed as

$$\widetilde{\mathbf{r}}_1 = \mathbf{A}^H\mathbf{H}_1^{-1}\mathbf{r}_1 = \alpha \cdot \mathbf{x}_1 + \mathbf{A}^H\mathbf{B}\mathbf{x}_2 + \mathbf{A}^H\mathbf{H}_1^{-1}\mathbf{n}_1 .$$

When the constraint on the precoders of node 1 and node 2 is further set, the interference from node 2 may be cancelled. Thus, we may assume that the precoders of node 1 and node 2 are orthogonal, that is $\mathbf{A}^H\mathbf{B} = \mathbf{0}$. Consequently, the following equation may be obtained.

$$\widetilde{\mathbf{r}}_1 = \mathbf{A}^H\mathbf{H}_1^{-1}\mathbf{r}_1 = \alpha \cdot \mathbf{x}_1 + \mathbf{A}^H\mathbf{H}_1^{-1}\mathbf{n}_1 .$$

To enhance the system performance, it may minimize the post-processing noise $\widetilde{\mathbf{n}}_1 = \mathbf{A}^H\mathbf{H}_1^{-1}\mathbf{n}_1$ by designing the precoder $\mathbf{A}$. Therefore, the disclosed exemplary embodiments may design the precoder $\mathbf{A}$ based on a criterion such as $\min E\{\|\tilde{n}_1\|^2\}$. By this approach, it may allow multiple nodes' data to be transmitted in the same resource and the system capacity is increased. As for the precoder **B**, the same procedure may be used to determine the coefficients in the precoder **B**.

From equation (2), it may be seen that the non-overlapped part in precoding matrices **A** and **B** are $\overline{\mathbf{A}}_1 = [a_{1,1}, a_{1,2}]$ and $\overline{\mathbf{B}}_1 = [b_{6,1}]$ and the overlapped part are

$$\overline{\mathbf{A}}_2 = \begin{bmatrix} a_{2,1} & a_{2,2} \\ a_{3,1} & a_{3,2} \\ a_{4,1} & a_{4,2} \\ a_{5,1} & a_{5,2} \end{bmatrix}, \quad \overline{\mathbf{B}}_2 = \begin{bmatrix} b_{2,1} \\ b_{3,1} \\ b_{4,1} \\ b_{5,1} \end{bmatrix}. \quad (3)$$

As mentioned above, the disclosed exemplary embodiments may design $\overline{\mathbf{A}}_2$ and $\overline{\mathbf{B}}_2$ to let them be orthogonal, which meets the assumption of $\mathbf{A}^H\mathbf{B} = \mathbf{0}$. For example, the disclosed exemplary embodiments may use the Discrete Fourier Transform (DFT) matrix, Hadamard matrix, or other orthogonal sequences to design $\overline{\mathbf{A}}_2$ and $\overline{\mathbf{B}}_2$. One of possible examples using DFT matrices is

$$\overline{\mathbf{A}}_2 = \frac{1}{\sqrt{10}} \begin{bmatrix} 1 & 1 \\ -j & -1 \\ -1 & 1 \\ j & -1 \end{bmatrix}, \quad \overline{\mathbf{B}}_2 = \frac{1}{\sqrt{5}} \begin{bmatrix} 1 \\ j \\ -1 \\ -j \end{bmatrix}.$$

And one of possible examples using Hadamard matrices is

$$\overline{\mathbf{A}}_2 = \frac{1}{\sqrt{10}} \begin{bmatrix} 1 & 1 \\ -1 & 1 \\ 1 & -1 \\ -1 & -1 \end{bmatrix}, \quad \overline{\mathbf{B}}_2 = \frac{1}{\sqrt{5}} \begin{bmatrix} 1 \\ -1 \\ -1 \\ 1 \end{bmatrix}.$$

As for the non-overlapped part, when $\overline{\mathbf{A}}_2^H \overline{\mathbf{B}}_2 = 0$, the precoders, i.e. **A** and **B**, are orthogonal no matter what $\overline{\mathbf{A}}_1$ and $\overline{\mathbf{B}}_1$ are. Based on this observation, the disclosed exemplary embodiments may have some degrees of freedom to design $\overline{\mathbf{A}}_1$ and $\overline{\mathbf{B}}_1$ according to the criterion such as min E$\{\|\tilde{\mathbf{n}}_1\|^2\}$.

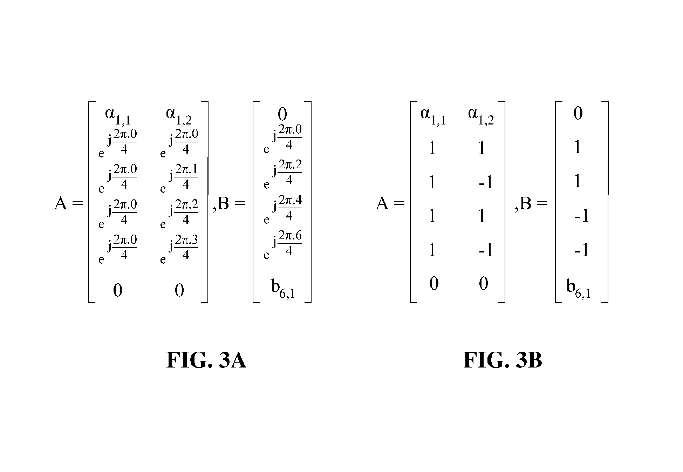

Therefore, the precoder design may include two parts, the overlapped and non-overlapped parts. For the overlapped part, we may have several schemes to design the precoder. For example, the precoder design for the overlapped part may be codebook-based such as using the DFT matrices, Hadamard matrices, or other orthogonal sequences. The precoder design may be codebook-based but non-orthogonal such as reusing LTE codebook. Thus the codebook-based precoding approach may be adopted for the overlapped part. FIG. 3A and FIG. 3B are two examples of precoding matrices for node 1 and node 2, using the DFT matrices and Hadamard matrices, respectively. In FIG. 3A, the 4×4 DFT matrix is used for 4 overlapped antennas and 3 layers. The matrix **A** is the precoding matrix for node 1 and the matrix B is the precoding matrix for node 2. The overlapped part, $\overline{\mathbf{A}}_2$ and $\overline{\mathbf{B}}_2$, in equation (3) meets the orthogonal assumption. In FIG. 3B, the 4×4 Hadamard matrix is used. Similarly, the overlapped part, $\overline{\mathbf{A}}_2$ and $\overline{\mathbf{B}}_2$, in equation (3) also meets the orthogonal assumption.

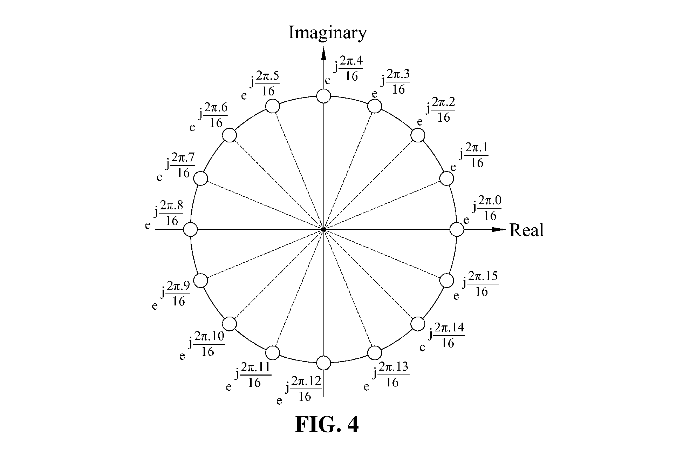

As for the non-overlapped part, there are also several schemes to design the precoder. For example, the precoder design for the non-overlapped part may be codebook-based, and the non-overlapped part may be on-line calculated by node 1 and node 2 using several bits for each coefficient and then feed back the coefficients in $\overline{\mathbf{A}}_1$ and $\overline{\mathbf{B}}_1$ to the central node under the constraint of the total transmit power. The feedback coefficients may be a plurality of phases in a unit circle or a plurality of complex values under a total power constraint. For example, one of schemes is to limit the feedback coefficient to be a phase in a unit circle. Since the non-overlapped part is a portion of the precoding matrix, the feedback overhead may be controlled under a certain threshold. To further reduce the overhead of the non-overlapped part, the disclosed exemplary embodiments may limit the feedback coefficients to be phases in a circle and build up a table for the possible feedback phases such as 16 phases, and feed back the indices of the selected phases from the table. FIG. 4 shows an example for feedback coefficients of the non-overlapped part of the precoding matrices, according to an exemplary embodiment. In the example of FIG. 4, there are 16 phases in a unit circle for feedback coefficients of the non-overlapped part of the precoding matrices. The 16 phases may be chosen as $e^{j\frac{2\pi m}{16}}$, m=0, 1, 2, ..., 15. The exemplary embodiment may use 4 bits to feed back each coefficient in the non-overlapped part.

Although the assumption of $\mathbf{A}^H\mathbf{B} = 0$ guarantees no interference from other nodes, i.e. interference-free, the exemplary embodiment also may relax this assumption to the case of $\| \mathbf{A}^H\mathbf{B} \|_F^2 \leq \varepsilon$, i.e. interference-limited, for more flexibility of designing the precoders, where $\|\mathbf{W}\|_F$ is the Frobenius norm of the matrix $\mathbf{W}$ and $\varepsilon$ is a variable to control the interference. In other words, the value of $\| \mathbf{A}^H\mathbf{B} \|_F^2$ (denoted as the mutual matrix distance of the precoders $\mathbf{A}$ and $\mathbf{B}$) may be close to zero or bounded under a certain value. For the case of $\| \mathbf{A}^H\mathbf{B} \|_F^2 \leq \varepsilon$, we may let the precoder $\mathbf{A}$ be part of a DFT matrix and the precoder $\mathbf{B}$ be obtained from phases in a unit circle, wherein the precoder $\mathbf{A}$ (or $\mathbf{B}$) itself may be orthogonal, and are formulated as follows:

$$\mathbf{A} = \frac{1}{\sqrt{10}}\begin{bmatrix} \sqrt{10}a_{1,1} & \sqrt{10}a_{1,2} \\ 1 & 1 \\ -j & -1 \\ -1 & 1 \\ j & -1 \\ 0 & 0 \end{bmatrix}, \mathbf{B} = \frac{1}{\sqrt{5}}\begin{bmatrix} 0 \\ e^{j\frac{2\pi\cdot 0}{16}} \\ e^{j\frac{2\pi\cdot 5}{16}} \\ e^{j\frac{2\pi\cdot 9}{16}} \\ e^{j\frac{2\pi\cdot 12}{16}} \\ \sqrt{5}b_{6,1} \end{bmatrix}, \text{ and } \mathbf{A}^H\mathbf{B} = \begin{bmatrix} 0 \\ 0.0649 - 0.0434i \end{bmatrix}$$

For the non-overlapped part of the precoding matrices, one of the object functions at distributed nodes for the optimum precoder design may be formulated as follows.

$$\min \left\{ E\left[ \left\| \mathbf{A}^H\mathbf{H}_1^{-1}\mathbf{n}_1 \right\|_F^2 \right] \right\}$$

Here $\mathbf{A}^H\mathbf{H}_1^{-1}\mathbf{n}_1$ is the post-processing noise.

The followings give another example for the first condition of the partial overlap and consider another scenario. The central node schedules 3 nodes to the same resource in the downlink and the numbers of layers for node 1, node 2, and node 3 are two, one, and one, respectively. The selected antennas subsets for node 1, node 2, and node 3 are $\mathbf{s}_1$ = {1,2,3,5,7,9}, $\mathbf{s}_2$ = {2,3,5,7,8,10}, and $\mathbf{s}_3$ = {2,3,4,5,6,7}, respectively. The number of antennas in node 1, node 2 and node 3 are $R_1$, $R_2$, and $R_3$, respectively. Here, a node such as node 1 is considered and the received signal model at the k-th subcarrier of node 1 may be expressed as

$$\mathbf{r}_1 = \mathbf{H}_1 \cdot \left( \mathbf{A}\mathbf{x}_1 + \mathbf{B}\mathbf{x}_2 + \mathbf{C}\mathbf{x}_3 \right) + \mathbf{n}_1 \quad (4)$$

where $\mathbf{r}_1$ is the received signal in node 1, and the matrices $\mathbf{A}$, $\mathbf{B}$, and $\mathbf{C}$ are the precoding matrices of node 1, node 2, and node 3, respectively. $\mathbf{H}_1$ is the wireless channel matrix from the central node to node 1, and $\mathbf{n}_1$ is the noise in node 1 such as the additive white Gaussian noise. Also, the column vectors $\mathbf{x}_1 = [x_{1,1}, x_{1,2}]^T$, $\mathbf{x}_2 = [x_{2,1}]^T$, and $\mathbf{x}_3 = [x_{3,1}]^T$ are the transmit data for node 1, node 2, and node 3, respectively. Equation (4) may be expanded as the following equation:

$$\mathbf{r}_1 = \mathbf{H}_1 \left( \begin{bmatrix} a_{1,1} & a_{1,2} \\ a_{2,1} & a_{2,2} \\ a_{3,1} & a_{3,2} \\ 0 & 0 \\ a_{5,1} & a_{5,2} \\ 0 & 0 \\ a_{7,1} & a_{7,2} \\ 0 & 0 \\ a_{9,1} & a_{9,2} \\ 0 & 0 \end{bmatrix} \begin{bmatrix} x_{1,1} \\ x_{1,2} \end{bmatrix} + \begin{bmatrix} 0 \\ b_{2,1} \\ b_{3,1} \\ 0 \\ b_{5,1} \\ 0 \\ b_{7,1} \\ b_{8,1} \\ 0 \\ b_{10,1} \end{bmatrix} \begin{bmatrix} x_{2,1} \end{bmatrix} + \begin{bmatrix} 0 \\ c_{2,1} \\ c_{3,1} \\ c_{4,1} \\ c_{5,1} \\ c_{6,1} \\ c_{7,1} \\ 0 \\ 0 \\ 0 \end{bmatrix} \begin{bmatrix} x_{3,1} \end{bmatrix} \right) + \mathbf{n}_1$$

where $a_{i,j} = \mathbf{A}(i,j)$, $b_{i,j} = \mathbf{B}(i,j)$, and $c_{i,j} = \mathbf{C}(i,j)$. In this example, the non-overlapped parts are expressed as

$$\overline{\mathbf{A}}_1 = \begin{bmatrix} a_{1,1} & a_{1,2} \\ a_{9,1} & a_{9,2} \end{bmatrix}, \overline{\mathbf{B}}_1 = \begin{bmatrix} b_{8,1} \\ b_{10,1} \end{bmatrix}, \overline{\mathbf{C}}_1 = \begin{bmatrix} c_{4,1} \\ c_{6,1} \end{bmatrix}.$$

And the overlapped parts are given by

$$\overline{\mathbf{A}}_2 = \begin{bmatrix} a_{2,1} & a_{2,2} \\ a_{3,1} & a_{3,2} \\ a_{5,1} & a_{5,2} \\ a_{7,1} & a_{7,2} \end{bmatrix}, \overline{\mathbf{B}}_2 = \begin{bmatrix} b_{2,1} \\ b_{3,1} \\ b_{5,1} \\ b_{7,1} \end{bmatrix}, \overline{\mathbf{C}}_2 = \begin{bmatrix} c_{2,1} \\ c_{3,1} \\ c_{5,1} \\ c_{7,1} \end{bmatrix}.$$

To meet the assumption of $\mathbf{A}^H \mathbf{B} = \mathbf{0}$, one of the possible examples using DFT matrices are

$$\overline{\mathbf{A}}_2 = \frac{1}{\sqrt{12}} \begin{bmatrix} 1 & 1 \\ 1 & -j \\ 1 & -1 \\ 1 & j \end{bmatrix}, \overline{\mathbf{B}}_2 = \frac{1}{\sqrt{6}} \begin{bmatrix} 1 \\ -1 \\ 1 \\ -1 \end{bmatrix}, \overline{\mathbf{C}}_2 = \frac{1}{\sqrt{6}} \begin{bmatrix} 1 \\ j \\ -1 \\ -j \end{bmatrix}.$$

Another possible example using Hadamard matrices are given by

$$\overline{\mathbf{A}}_2 = \frac{1}{\sqrt{12}}\begin{bmatrix} 1 & 1 \\ 1 & -1 \\ 1 & 1 \\ 1 & -1 \end{bmatrix}, \overline{\mathbf{B}}_2 = \frac{1}{\sqrt{6}}\begin{bmatrix} 1 \\ 1 \\ -1 \\ -1 \end{bmatrix}, \overline{\mathbf{C}}_2 = \frac{1}{\sqrt{6}}\begin{bmatrix} 1 \\ -1 \\ -1 \\ 1 \end{bmatrix}.$$

As for the non-overlapped part, the matrices $\overline{\mathbf{A}}_1$, $\overline{\mathbf{B}}_1$, and $\overline{\mathbf{C}}_1$ may be on-line calculated by node 1, node 2, and node 3 based on the criterion of min $E\{\|\tilde{\mathbf{n}}_1\|^2\}$ or other criterions and then fed back to the central node as mentioned above.

For the second condition of the non-overlap, one example is presented to describe it and the following scenario is considered. The central node schedules 2 distributed nodes to the same resource and the numbers of layers for node 1, and node 2 are two and two, respectively. The selected antenna subsets for node 1, and 2 are $\mathbf{s}_1$ = {1,2,3,4}, and $\mathbf{s}_2$ = {5,6,7,8}, respectively. The number of antennas in node 1 is $R_1$
and that of antennas in node 2 is $R_2$. The received signal model at the kth subcarrier in node 1 is expressed as follows.

$$\mathbf{r}_1 = \mathbf{H}_1 \cdot (\mathbf{A}\mathbf{x}_1 + \mathbf{B}\mathbf{x}_2) + \mathbf{n}_1$$

where $\mathbf{r}_1$ is the received signal in node 1, the matrices $\mathbf{A}$ and $\mathbf{B}$ are the precoding matrices for node 1 and node 2, $\mathbf{H}_1$ is the wireless channel matrix from the central node to node 1, and $\mathbf{n}_1$ is the AWGN in node 1.
Also, the column vector $\mathbf{x}_1 = [x_{1,1}, x_{1,2}]^T$ is the transmit data for node 1 and $\mathbf{x}_2 = [x_{2,1}, x_{2,2}]$ is the transmit data for node 2. In this second condition, there are no overlapped parts. Therefore, the equation of the received signal model for the second condition may be expanded as the following equation:

$$\mathbf{r}_1 = \mathbf{H}_1\left(\begin{bmatrix} a_{1,1} & a_{1,2} \\ a_{2,1} & a_{2,2} \\ a_{3,1} & a_{3,2} \\ a_{4,1} & a_{4,2} \\ 0 & 0 \\ 0 & 0 \\ 0 & 0 \\ 0 & 0 \end{bmatrix}\begin{bmatrix} x_{1,1} \\ x_{1,2} \end{bmatrix} + \begin{bmatrix} 0 & 0 \\ 0 & 0 \\ 0 & 0 \\ 0 & 0 \\ b_{5,1} & b_{5,2} \\ b_{6,1} & b_{6,2} \\ b_{7,1} & b_{7,2} \\ b_{8,1} & b_{8,2} \end{bmatrix}\begin{bmatrix} x_{2,1} \\ x_{2,2} \end{bmatrix}\right) + \mathbf{n}_1$$

where $a_{i,j} = \mathbf{A}(i,j)$, and $b_{i,j} = \mathbf{B}(i,j)$. As for the non-overlapped parts, they are given by

$$\overline{\mathbf{A}}_1 = \begin{bmatrix} a_{1,1} & a_{1,2} \\ a_{2,1} & a_{2,2} \\ a_{3,1} & a_{3,2} \\ a_{4,1} & a_{4,2} \end{bmatrix}, \overline{\mathbf{B}}_1 = \begin{bmatrix} b_{5,1} & b_{5,2} \\ b_{6,1} & b_{6,2} \\ b_{7,1} & b_{7,2} \\ b_{8,1} & b_{8,2} \end{bmatrix}.$$

In this second condition of the non-overlap, the assumption of $\mathbf{A}^H\mathbf{B} = \mathbf{0}$ is satisfied in nature. As for the non-overlapped part, the matrices $\overline{\mathbf{A}}_1$ and $\overline{\mathbf{B}}_1$ may be on-line calculated by node 1 and node 2 based on the criterion of min $E\{\|\tilde{\mathbf{n}}_1\|^2\}$ and the resulting coefficients are fed back to the central node. One of possible approaches is to reuse the codebook in LTE/LTE-A or to use a predefined codebook. Another approach is to let each node feed back each coefficient using some bits as mentioned in the first condition of the partial overlap. If the two co-scheduled distributed nodes use the same modulation and the adopted codebook is common for all co-scheduled distributed nodes, the distributed node could adopt the Maximum Likelihood (ML) method to detect the transmit signals with 6 antennas ($R_1 = 6$), and the ML criterion is express as

$$\min \ \left\| \mathbf{r}_1 - \mathbf{H}_1 \cdot \left( \mathbf{A}\mathbf{x}_1 + \mathbf{B}\mathbf{x}_2 \right) \right\|^2.$$

If not the case, we could detect the data using the above-mentioned ZF detector with 8 antennas ($R_1 \geq 8$).

For the third condition of the full overlap, one example is given to describe it and the following scenario is considered. The central node schedules 2 distributed nodes to the same resource and the numbers of layers for node 1 and node 2 are 2 and 1, respectively. The selected antenna subsets for node 1 and node 2 are $\mathbf{s}_1 = \{1,2,3,4,5,6,7,8\}$ and $\mathbf{s}_2 = \{1,2,3,4,5,6,7,8\}$, respectively. The number of antennas at node 1 is $R_1$ and that of antennas at node 2 is $R_2$. The received signal model at the kth subcarrier in node 1 is also expressed as $\mathbf{r}_1 = \mathbf{H}_1 \cdot (\mathbf{A}\mathbf{x}_1 + \mathbf{B}\mathbf{x}_2) + \mathbf{n}_1$, where the meaning for each symbol is the same as above-mentioned. In this condition of the full overlap, the received signal model may be expressed as follows.

$$\mathbf{r}_1 = \mathbf{H}_1 \left( \begin{bmatrix} a_{1,1} & a_{1,2} \\ a_{2,1} & a_{2,2} \\ a_{3,1} & a_{3,2} \\ a_{4,1} & a_{4,2} \\ a_{5,1} & a_{5,2} \\ a_{6,1} & a_{6,2} \\ a_{7,1} & a_{7,2} \\ a_{8,1} & a_{8,2} \end{bmatrix} \begin{bmatrix} x_{1,1} \\ x_{1,2} \end{bmatrix} + \begin{bmatrix} b_{1,1} \\ b_{2,1} \\ b_{3,1} \\ b_{4,1} \\ b_{5,1} \\ b_{6,1} \\ b_{7,1} \\ b_{8,1} \end{bmatrix} \begin{bmatrix} x_{2,1} \end{bmatrix} \right) + \mathbf{n}_1$$

where $a_{i,j} = \mathbf{A}(i,j)$, and $b_{i,j} = \mathbf{B}(i,j)$. In this condition, there are the overlapped parts which are given by

$$\overline{\mathbf{A}}_2 = \begin{bmatrix} a_{1,1} & a_{1,2} \\ a_{2,1} & a_{2,2} \\ a_{3,1} & a_{3,2} \\ a_{4,1} & a_{4,2} \\ a_{5,1} & a_{5,2} \\ a_{6,1} & a_{6,2} \\ a_{7,1} & a_{7,2} \\ a_{8,1} & a_{8,2} \end{bmatrix}, \ \overline{\mathbf{B}}_2 = \begin{bmatrix} b_{1,1} \\ b_{2,1} \\ b_{3,1} \\ b_{4,1} \\ b_{5,1} \\ b_{6,1} \\ b_{7,1} \\ b_{8,1} \end{bmatrix}.$$

To reach the goal of interference-free, we make the assumption of $\mathbf{A}^H\mathbf{B} = \mathbf{0}$. And one of the possible examples using DFT matrices is

$$\overline{\mathbf{A}}_2 = \frac{1}{\sqrt{16}}\begin{bmatrix} 1 & 1 \\ 0.707-0.707\mathrm{j} & -\mathrm{j} \\ -\mathrm{j} & -1 \\ -0.707-0.707\mathrm{j} & \mathrm{j} \\ -1 & 1 \\ -0.707+0.707\mathrm{j} & -\mathrm{j} \\ 1 & -1 \\ 0.707+0.707\mathrm{j} & \mathrm{j} \end{bmatrix}, \quad \overline{\mathbf{B}}_2 = \frac{1}{\sqrt{8}}\begin{bmatrix} 1 \\ -1 \\ 1 \\ -1 \\ 1 \\ -1 \\ 1 \\ -1 \end{bmatrix}.$$

Another example using Hadamard matrices is expressed as

$$\overline{\mathbf{A}}_2 = \frac{1}{\sqrt{16}}\begin{bmatrix} 1 & 1 \\ -1 & 1 \\ 1 & -1 \\ -1 & -1 \\ 1 & 1 \\ -1 & 1 \\ 1 & -1 \\ -1 & -1 \end{bmatrix}, \quad \overline{\mathbf{B}}_2 = \frac{1}{\sqrt{6}}\begin{bmatrix} 1 \\ -1 \\ -1 \\ 1 \\ 1 \\ -1 \\ -1 \\ 1 \end{bmatrix}.$$

As mentioned earlier, the disclosed exemplary embodiments may relax this assumption to the case of $\left\|\mathbf{A}^H\mathbf{B}\right\|_F^2 < \varepsilon$,

where $\varepsilon$ is a variable to control the interference. One of the object functions for the optimum precoder design (e.g. precoder A) may be formulated as follows.

$$\max\left\{ \frac{E\left[\left\|\mathbf{A}^H\mathbf{A}\mathbf{x}_1\right\|_F^2\right]}{E\left[\left\|\mathbf{A}^H\mathbf{B}\mathbf{x}_2\right\|_F^2\right] + E\left[\left\|\mathbf{A}^H\mathbf{H}_1^{-1}\mathbf{n}_1\right\|_F^2\right]} \right\}.$$

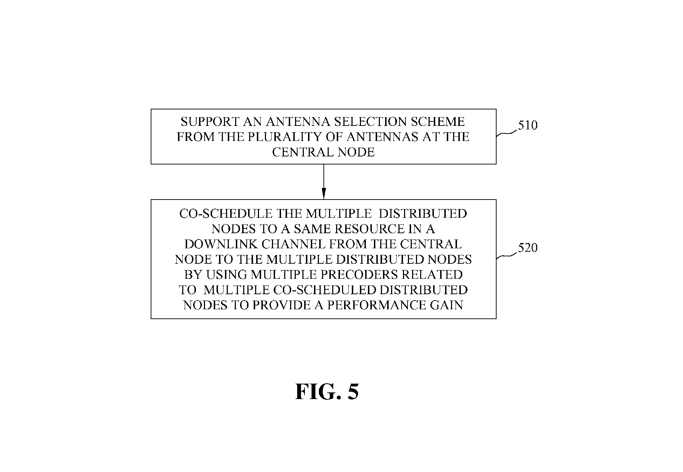

Accordingly, FIG. 5 shows a method with antenna selection in a communication system, according to an exemplary embodiment. The communication system has multiple distributed nodes and a central node equipped with a plurality of antennas. As shown in FIG. 5, the method may support an antenna selection scheme at the central node with a plurality of antennas (step 510), and may co-schedule the multiple distributed nodes to a same resource in a downlink channel from the central node to the multiple distributed nodes by using multiple precoders related to multiple co-scheduled distributed nodes to provide a performance gain (step 520). Wherein, the method further includes a precoder design and a corresponding signaling procedure to complete an assignment of the multiple precoders for the multiple co-scheduled distributed nodes, and the precoder design is based on one of conditions of partially overlapped antenna selection, non-overlapped antenna selection, and fully overlapped antenna selection.

As described in the aforementioned exemplary embodiments, the multiple precoders in FIG. 5 may include two parts, the overlapped and non-overlapped parts. The overlapped part of the multiple precoders in FIG. 5 may be codebook-based. The pr-coding matrices corresponding to the overlapped part may be orthogonal. For example, the precoding matrices may come from DFT matrices, Hadamard matrices, or other orthogonal sequences. The precoding matrices corresponding to the overlapped part may be not orthogonal and their mutual matrix distance is close to zero or bounded under a certain value. The non-overlapped part of the precoders may be on-line calculated and fed back to the central node. The feedback coefficients may be phases in a unit circle or any values under a total power constraint. Phase-feedback may be codebook-based or non-codebook based. The overlapped and non-overlapped parts may have different precoding granularities (resolutions).

Here, the related signaling and procedures for determining the precoding matrices of all co-scheduled distributed nodes are described. In the following, the disclosure gives, but do not limit to, three exemplary embodiments to determine the precoders of all co-scheduled distributed nodes. The first exemplary embodiment referred to the fully-centralized configuration is to let the central node fully determine the precoders of all co-scheduled distributed nodes. The second exemplary embodiment referred to the semi-centralized configuration is to let some distributed nodes select their own precoders and the central node may select the precoders for the rest of all co-scheduled distributed nodes. The third exemplary embodiment referred to the de-centralized configuration is to let all co-scheduled distributed nodes select their own precoders. The details for the three exemplary embodiments are explained in the following, wherein the scenario of a communication system having one central node and three co-scheduled distributed nodes such as node 1, node 2 and node 3 is taken for the explanation.

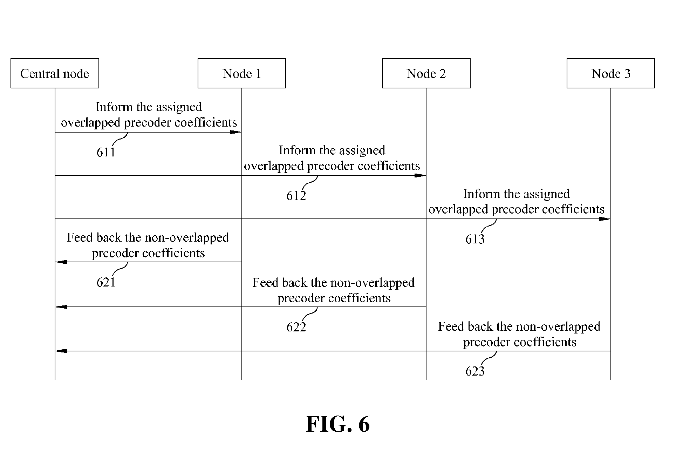

According to a first exemplary embodiment, the central node assigns the overlapped part of the precoders related to all co-scheduled distributed nodes and all co-scheduled distributed nodes feed back the coefficients in the non-overlapped part of their precoders to the central node. FIG. 6 shows the related signaling and the procedure for determining the precoders of all co-scheduled distributed nodes, according to the first exemplary embodiment. Referring to FIG. 6, the central node transmits signals to inform each of all co-scheduled distributed nodes, i.e. node 1, node 2 and node 3, of the assigned overlapped precoder coefficients, as shown by three arrows 611~613, respectively. Thereby, all co-scheduled distributed nodes may be informed of which precoding matrices are selected for the overlapped parts of their precoders. For the non-overlapped part, all co-scheduled distributed nodes feed back the coefficients in the non-overlapped part of their precoders to the central node, as shown by three arrows 621~623, respectively.

For example, the central node schedules 3 nodes to receive data in the same resource and the number of layers for nodes 1, 2 and 3 is two, one, and one, respectively. The selected antenna subsets for node 1, node 2 and node 3 are $\mathbf{s}_1 = \{1,2,3,4,5\}$, $\mathbf{s}_2 = \{2,3,4,5,6\}$, and $\mathbf{s}_3 = \{2,3,4,5,7\}$, respectively. The matrices for the overlapped part in node 1, node 2, and node 3 are $\overline{\mathbf{A}}_2$, $\overline{\mathbf{B}}_2$, and $\overline{\mathbf{C}}_2$, and the corresponding dimensions of $\overline{\mathbf{A}}_2$, $\overline{\mathbf{B}}_2$, and $\overline{\mathbf{C}}_2$ are 4×2, 4×1, and 4×1, respectively. The central node may select two column vectors from a 4×4 DFT matrix (or Hadamard matrix) for $\overline{\mathbf{A}}_2$ using 4 bits (2 bits for each column), 1 column vector from the 4×4 DFT matrix (or Hadamard matrix) for $\overline{\mathbf{B}}_2$ using 2 bits, and 1 column vector from the 4×4 DFT matrix (or Hadamard matrix) for $\overline{\mathbf{C}}_2$ using 2 bits. The selected column vectors for $\overline{\mathbf{A}}_2$, $\overline{\mathbf{B}}_2$ and $\overline{\mathbf{C}}_2$ are all different. For example, $\overline{\mathbf{A}}_2$, $\overline{\mathbf{B}}_2$, and $\overline{\mathbf{C}}_2$ may be

$$\overline{\mathbf{A}}_2 = \frac{1}{\sqrt{10}}\begin{bmatrix} 1 & 1 \\ 1 & -1 \\ 1 & 1 \\ 1 & -1 \end{bmatrix}, \overline{\mathbf{B}}_2 = \frac{1}{\sqrt{5}}\begin{bmatrix} 1 \\ 1 \\ -1 \\ -1 \end{bmatrix}, \text{ and } \overline{\mathbf{C}}_2 = \frac{1}{\sqrt{5}}\begin{bmatrix} 1 \\ -1 \\ -1 \\ 1 \end{bmatrix}$$

As for the non-overlapped part of $\overline{\mathbf{A}}_1 = [a_{1,1}, a_{1,2}]$, $\overline{\mathbf{B}}_1 = [b_{6,1}]$, and $\overline{\mathbf{C}}_1 = [c_{7,1}]$, i.e. the rest of coefficients in the full precoders of $\mathbf{A}$, $\mathbf{B}$, and $\mathbf{C}$, node 1, node 2, and node 3 feed back the coefficients to the central node. For example, node 1, node 2, and node 3 may use 4 bits for each coefficient to feed back the coefficients $(a_{1,1}, a_{1,2}, b_{6,1}, c_{7,1})$.

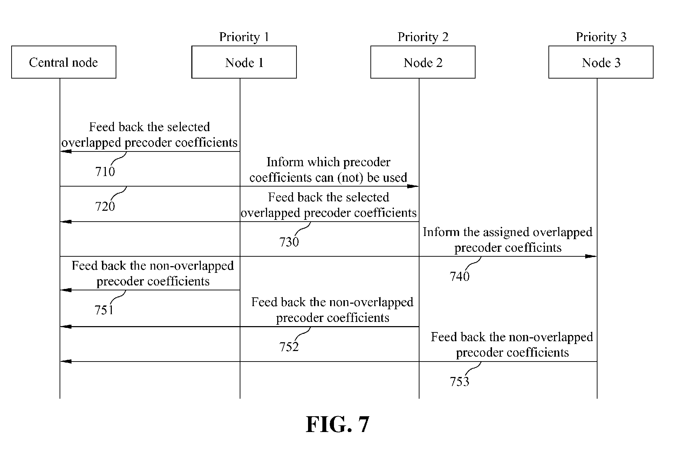

According to a second exemplary embodiment, the central node may decide the priorities of all co-scheduled distributed nodes for precoder selection. The priorities decided by the central node may be based on the number of layers of each node and quality of service (QoS) such as the resource type (guaranteed bite rate (GBR) or non-GBR), packet delay budget, packet error loss rate, and so on. Some co-scheduled distributed nodes with higher priority among all co-scheduled distributed nodes may by themselves decide the overlapped parts of the precoders in order, but the central node assigns the overlapped parts of the precoders to the other co-scheduled distributed nodes. Also all co-scheduled distributed nodes have to feed back the coefficients of the non-overlapped parts of the precoders. FIG. 7 shows the related signaling and the procedure for determining the precoders of all co-scheduled distributed nodes, according to the second exemplary embodiment. Referring to FIG. 7, the central node may first decide the priorities of all co-scheduled distributed nodes, i.e. node 1, node 2 and node 3, for precoder selection, and signaling the co-scheduled distributed node having the highest priority to feed back the overlapped precoder coefficients. Assume that node 1, node 2 and node 3 have priority 1, priority 2 and priority 3, respectively, to feed back a precoding matrix for the overlapped part. Node 1 may first feed back such as the selected overlapped precoder coefficients to the central node. Node 1 may select $v_1$ column vectors from a DFT matrix, Hadamard matrix, or other orthogonal sequences, and feed back them to the central node, where $v_1$ is the number of layers transmitted from the central node to node 1. For example, as shown by an arrow 710, node 1 feeds back the selected overlapped precoder coefficients to the central node. Then, the central node may transmit a signal to node 2 (having priority 2) about the selected precoder for the overlapped part by node 1, to inform node 2 which precoder coefficients may or may not be used as shown by an arrow 720, and node 2 feeds back its selected overlapped precoder coefficients to the central node, as shown by an arrow 730. The central node informs node 3 of the assigned overlapped precoder coefficients, as shown by an arrow 740. In other words, node 1 and node 2 decide by themselves the overlapped parts of the precoders in order, while the central node decides the overlapped part of the precoders for node 3. Then, node 1, node 2 and node 3 feed back the non-overlapped precoder coefficients to the central node, as shown by three arrows 753~753, respectively. In other words, all co-scheduled distributed nodes feed back the related coefficients in the non-overlapped part to the central node.

For example, the central node schedules 3 nodes to receive data in the same resource and the numbers of layers for node 1, node 2 and node 3 are two, one, and one respectively. The selected antenna sets for node 1, node 2, and node 3 are $\mathbf{s}_1 = \{1,2,3,4,5\}$, $\mathbf{s}_2 = \{2,3,4,5,6\}$, and $\mathbf{s}_3 = \{2,3,4,5,7\}$, respectively. Assume that the central node gives node 1 the highest priority to select the precoder and node 2 the second priority. The overlapped parts for node 1, node 2, and node 3 are the matrices $\overline{\mathbf{A}}_2$, $\overline{\mathbf{B}}_2$, and $\overline{\mathbf{C}}_2$, respectively, and the corresponding dimensions of $\overline{\mathbf{A}}_2$, $\overline{\mathbf{B}}_2$, and $\overline{\mathbf{C}}_2$ are $4\times2$, $4\times1$, and $4\times1$, respectively. $\overline{\mathbf{A}}_2$, $\overline{\mathbf{B}}_2$, and $\overline{\mathbf{C}}_2$ may be

$$\overline{\mathbf{A}}_2 = \frac{1}{\sqrt{10}}\begin{bmatrix} 1 & 1 \\ 1 & -1 \\ 1 & 1 \\ 1 & -1 \end{bmatrix}, \overline{\mathbf{B}}_2 = \frac{1}{\sqrt{5}}\begin{bmatrix} 1 \\ 1 \\ -1 \\ -1 \end{bmatrix}, \text{ and } \overline{\mathbf{C}}_2 = \frac{1}{\sqrt{5}}\begin{bmatrix} 1 \\ -1 \\ -1 \\ 1 \end{bmatrix}$$

where $\overline{\mathbf{A}}_2$ is selected by node 1, and node 1 may select two column vectors from the $4\times4$ DFT matrix for $\overline{\mathbf{A}}_2$ using 4 bits (2 bits for each column). $\overline{\mathbf{B}}_2$ is selected by node 2, and node 2 may select one column vector from the $4\times4$ DFT matrix for $\overline{\mathbf{B}}_2$ using 2 bits (2 bits for each column). $\overline{\mathbf{C}}_2$ is assigned by the central node, and the central node may select 1 column vector from the $4\times4$ DFT matrix for $\overline{\mathbf{C}}_2$ and transmit the precoding matrix index using 2 bits to inform node 3. As for the non-overlapped part of $\overline{\mathbf{A}}_1 = [a_{1,1}, a_{1,2}]$ and $\overline{\mathbf{B}}_1 = [b_{6,1}]$, and $\overline{\mathbf{C}}_1 = [c_{7,1}]$, node 1, node 2, and node 3 may use 4 bits for each coefficient to feed back all the coefficients $(a_{1,1}, a_{1,2}, b_{6,1}, c_{7,1})$.

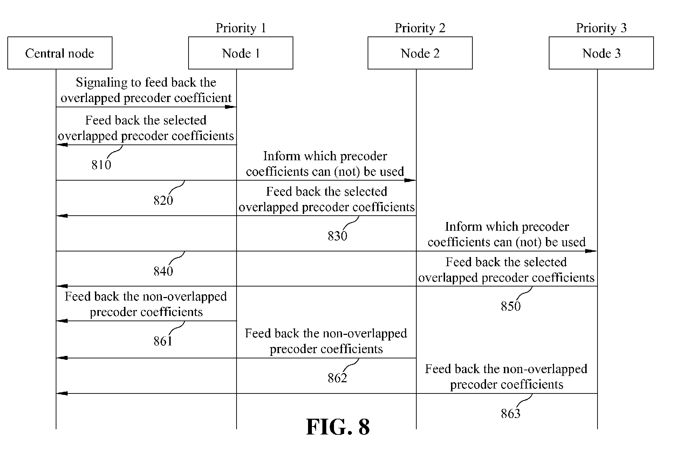

According to a third exemplary embodiment, the central node may decide the priorities of all co-scheduled distributed nodes, and signaling the co-scheduled distributed node having the highest priority to feed back the overlapped precoder coefficients. The priorities decided by the central node may be based on the number of layers of each node and quality of service (QoS) such as the resource type (guaranteed bite rate (GBR) or non-GBR), packet delay budget, packet error loss rate, and so on. After the central node decides the priorities, the central node may inform each node. Base on the priorities decided by the central node, all distributed nodes select their own precoders in order. The all distributed nodes may feed back the selected precoding coefficients for the overlapped part to the central node. For the non-overlapped part, the all co-scheduled distributed nodes feed back the related coefficients to the central node. FIG. 8 shows the related signaling and the procedure for determining the precoders of all co-scheduled distributed nodes, according to a third exemplary embodiment. Referring to FIG. 8, the node with the highest priority (such as node 1) may first decide the overlapped part of its precoder and feed back the coefficients of the selected overlapped part of the precoder, as shown by an arrow 810. Then the central node may inform the node with the second priority (such as node 2) of which precoder coefficients may or may not be used (one bit for indication), as shown by an arrow 820. Node 2 then decides the overlapped part of its precoder and feeds back the coefficients of the selected overlapped part of its precoder to the central node, as shown by an arrow 830. Then the central node may inform the node with the third priority (such as node 3) of which precoder coefficients may or may not be used, as shown by an arrow 840. Node 3 then decides the overlapped part of its precoder and feeds back the coefficients of the selected overlapped part of its precoder to the central node, as shown by an arrow 850. The process is repeated until all co-scheduled distributed nodes, i.e. node 1~node 3, have determined their own precoders and feeds back the selected overlapped part of their precoders to the central node. In the example, when node 3 feeds back the selected overlapped part of its precoders to the central node as shown by an arrow 850, all co-scheduled distributed nodes have determined their own precoders on the overlapped parts. Then, all co-scheduled distributed nodes feed back the related coefficients in the non-overlapped part to the central node as shown by three arrows 861~863, respectively.

In the second and third exemplary embodiments, the central node has to decide the order (priority) of all distributed nodes for precoder selection. As mentioned earlier, the central node may decide the priorities based on the number of layers of each node, QoS such as the resource type (guaranteed bite rate (GBR) or non-GBR), packet delay budget, packet error loss rate, and so on in the communication system. Take the number of layers for example. A node may have the highest priority to select the precoder for the overlapped part when the number of layers of the node is largest among all co-scheduled distributed nodes. The node with the smallest number of layers has the lowest priority to select the precoder for the overlapped part. If the number of layers is the same, the order may be decided based on the round robin method or random selection. Thus, the priority is proportional to the number of layers if the number of layers is used to make decisions.

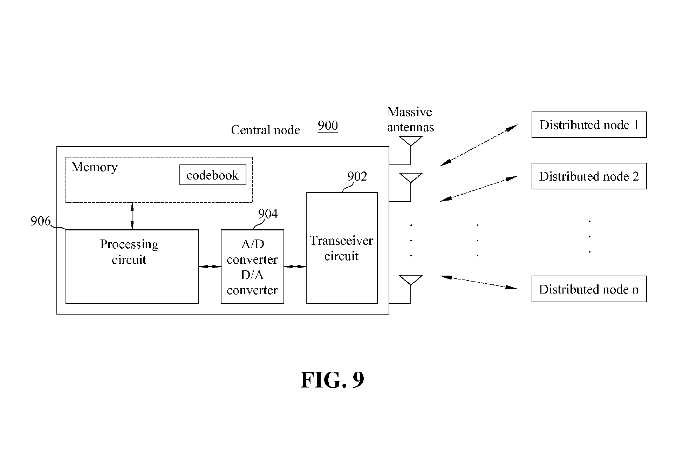

According to the aforementioned, FIG. 9 shows a central node supporting the antenna selection function in a communication system, and equipped with a plurality of antennas, according to an exemplary embodiment. As shown in FIG. 9, the central node 900 may comprise a transceiver circuit 902, a converter 904, and a processing circuit 906. The transceiver circuit 902 may transmit signals to multiple distributed nodes denoted by distributed node 1~distributed node n, $n \geqq 2$, and receive signals from the multiple co-scheduled distributed nodes. The signals may carry related information transmitted or received by the central node, as shown in FIGs. 6, 7, and 8. The detailed is not repeated here. The transceiver circuit 902 may perform general operations such as low noise amplifying, frequency mixing, up or down frequency conversion, filtering, amplifying, and so on.

The converter 904 is configured to perform a format conversion between digital signals and analog signals. Thus the converter 904 may convert an analog signal format to a digital signal format during uplink (from distributed nodes to the central node) and to convert a digital signal format to an analog signal format during downlink (from the central node to the distributed nodes). The signals involved may be seen from FIGs. 6, 7, and 8. The detailed is not repeated here. As described in the aforementioned, the processing circuit 906 may determine the priority of each distributed node. And, the processing circuit 906 may assign an overlapped part of each of the precoders of distributed nodes when the overlapped part is decided at the central node, such as when the multiple precoders are under a condition of partially overlapped antenna selection, for example, the aforementioned exemplary embodiment in FIG. 6 and the aforementioned exemplary embodiment in FIG. 7. The processing circuit 906 may receive the non-overlapped parts of multiple precoders of all co-scheduled distributed nodes, which may be seen from FIGs. 6, 7, and 8. The one or more codebooks used for the precoder design may be stored in a memory that may be an internal memory or an external memory of the central node 900.

Thereby, antenna selection of the plurality of antennas may be supported at the central node. The multiple distributed nodes may be co-scheduled to the same resource in a downlink channel from the central node to the multiple co-scheduled distributed nodes by using the multiple precoders related to the multiple co-scheduled distributed nodes to provide a performance gain.

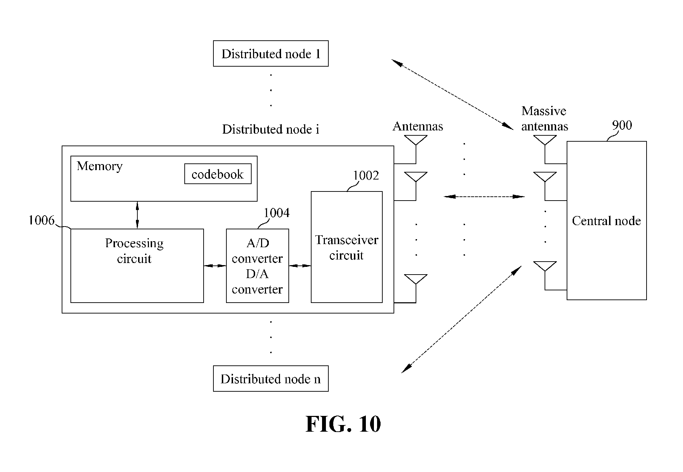

According to the aforementioned, FIG. 10 shows a distributed node with an antenna selection mechanism in a communication system, and equipped with a plurality of antennas, according to an exemplary embodiment. Referring to FIG. 10, each of distributed nodes 1~n may comprise a transceiver circuit 1002, a converter 1004, and a processing circuit 1006. The transceiver circuit 1002 may transmit signals to the central node 900 and receive signals from the central node. The signals may carry related information transmitted or received by the distributed node i, as shown in FIGs. 6, 7, and 8. The detailed is not repeated here. The transceiver circuit 1002 may perform general operations such as low noise amplifying, frequency mixing, up or down frequency conversion, filtering, amplifying, and so on.

The technical features of the converter 1004 are the same as that of the converter 904. The detailed is not repeated again. The signals involved may be seen from FIGs. 6~8. The detailed is not repeated here. As described in the aforementioned, the processing circuit 1006 in the distributed node i may determine the overlapped part of at least one precoder for at least one distributed node having a higher priority compared with a predefined value. And, the processing circuit 1006 of the distributed node i may determine the non-overlapped part of a precoder for itself, for example, the aforementioned exemplary embodiments in FIGs. 6~8. The processing circuit 1006 may receive and transmit signals related to determining the precoder, which may be seen from FIGs. 6~8. The codebook(s) used for the precoder design may be stored in a memory that may be an internal or external memory of the distributed node i.

Thereby, antenna selection of the plurality of antennas may be supported at each distributed node i, and the multiple distributed nodes may be co-scheduled to the same resource in a downlink channel from the central node to the multiple co-scheduled distributed nodes by using the multiple precoders related to the multiple co-scheduled distributed nodes to provide a performance gain.

The signals involved in FIGs. 6, 7, and 8 relate to the transceiver circuit, the converter, the processing circuit, and the memory for both the central node and each distributed node. The transceiver circuit and the converter are the basic communication elements for transmitting and receiving signals. Since the transmitted or the received signals relate to the precoder coefficients, therefore, an internal or external memory is used for storing or/and accessing the non-overlapped part and the overlapped part for a precoding matrix. The signals between the memory and the processing circuit are the precoder coefficients, priorities of the distributed nodes, and so on. The signals between the converter and the processing circuit are the signals to be transmitted and to be received. The signals between the converter and the transceiver circuit are the signals to be transmitted and to be received.

The central node may be a communication device such as a base station. Each of the multiple distributed nodes may be a communication device such as a small cell including a picocell and a Femto cell, etc. The central node may be equipped with massive antennas and the multiple distributed nodes may have a limited number of antennas compared to that in the central node. As aforementioned, the multiple precoders may be under a condition of partially overlapped antenna selection, non-overlapped antenna selection, and fully overlapped antenna selection. When the multiple precoders are partially overlapped, the multiple precoders include an overlapped part and a non-overlapped part. The non-overlapped part in the multiple precoders may be on-line calculated by distributed nodes and fed back to the central node. As mentioned earlier, the multiple priorities decided by the central node may be based on the number of layers of each of the co-scheduled distributed nodes, QoS, etc. in the communication system.

In summary, the exemplary embodiments provide a method to design the precoders related to antenna selection in a communication system with a central node and multiple distributed nodes. This technology uses antenna selection and precoding to obtain a performance gain (i.e. increasing system capacity). The antenna subsets corresponding to the co-scheduled distributed nodes in this communication system may be different. Thus the precoders related to the co-scheduled distributed nodes may be partially overlapped, non-overlapped or fully overlapped. In the exemplary embodiments, for the overlapped part of precoding matrices, the central node may assign the precoders of all co-scheduled distributed nodes by itself; or some co-scheduled distributed nodes may select their own precoders and the central node may select the precoders for the rest of all co-scheduled distributed nodes; or all co-scheduled distributed nodes may select their own precoders.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A method with antenna selection in a communication system having multiple distributed nodes and a central node equipped with a plurality of antennas, comprising:

   supporting an antenna selection scheme from said plurality of antennas at said central node; and
   co-scheduling the multiple distributed nodes to a same resource in a downlink channel from the central node to multiple co-scheduled distributed nodes by using multiple precoders related to the multiple co-scheduled distributed nodes to provide a performance gain;
   wherein the method further includes a precoder design and a corresponding signaling procedure to complete an assignment of the multiple precoders for the multiple co-scheduled distributed nodes, and the precoder design is based on one of conditions of partially overlapped antenna selection, non-overlapped antenna selection, and fully overlapped antenna selection.

2. The method as claimed in claim 1, wherein when the multiple precoders are under a condition of partially overlapped antenna selection, the multiple precoders include an overlapped part and a non-overlapped part.

3. The method as claimed in claim 2, wherein multiple precoding matrices corresponding to the overlapped part in the multiple precoders are codebook-based and orthogonal.

4. The method as claimed in claim 2, wherein multiple precoding matrices corresponding to the overlapped part in the multiple precoders are codebook-based, and their mutual matrix distance is close to zero or bounded under a certain value.

5. The method as claimed in claim 2, wherein said non-overlapped part in the multiple precoders is on-line calculated and fed back to the central node.

6. The method as claimed in claim 5, wherein a plurality of coefficients fed back to the central node are a plurality of phases in a unit circle or a plurality of complex values under a total power constraint.

**7.** The method as claimed in claim 2, wherein said method further includes:

assigning, at the central node, the overlapped part of the multiple precoders related to the multiple co-scheduled distributed nodes; and
feeding back, by the multiple co-scheduled distributed nodes, a plurality of coefficients in the non-overlapped part of the multiple precoders to the central node.

**8.** The method as claimed in claim 2, wherein said method further includes:

deciding, by the central node, multiple priorities of the multiple co-scheduled distributed nodes for precoder selection;
deciding, by one or more distributed nodes of the multiple co-scheduled distributed nodes with higher priorities among the multiple priorities, the overlapped part of their precoders in order, while assigning, by the central node, the overlapped part of the precoders to the others of the multiple co-scheduled distributed nodes; and
feeding back, by the multiple distributed nodes, a plurality of coefficients of the non-overlapped part of the multiple precoders to the central node.

**9.** The method as claimed in claim 2, wherein said method further includes:

deciding, by the central node, multiple priorities of the multiple co-scheduled distributed nodes; base on the priorities decided by the central node, selecting, by the multiple co-scheduled distributed nodes, the overlapped part in their own precoders in order; and
feeding back, by the multiple co-scheduled distributed nodes, a plurality of coefficients in the non-overlapped part of the multiple precoders to the central node.

**10.** The method as claimed in claim 8, wherein the multiple priorities decided by the central node are based on number of layers of each of the multiple co-scheduled distributed nodes, and at least one quality of service in the communication system.

**11.** The method as claimed in claim 9, wherein the multiple priorities decided by the central node are based on number of layers of each of the multiple co-scheduled distributed nodes, and at least one quality of service in the communication system.

**12.** The method as claimed in claim 1, wherein the multiple precoders include an overlapped part and a non-overlapped part, and the overlapped and non-overlapped parts have different precoding granularities.

**13.** The method as claimed in claim 1, wherein when two co-scheduled distributed nodes of the multiple co-scheduled distributed nodes use a same modulation and an adopted codebook is common for the multiple co-scheduled distributed nodes, a maximum likelihood method is adopted to detect data transmitted to the two co-scheduled distributed nodes; otherwise, a zero forcing detector is adopted to detect the data transmitted.

**14.** A central node supporting an antenna selection function in a communication system, and equipped with a plurality of antennas, comprising:

a transceiver circuit for transmitting and receiving a plurality of signals to and from multiple distributed nodes;
a converter configured to perform a format conversion between one or more digital signals and one or more analog signals from the multiple distributed nodes to the central node or from the central node to the multiple distributed nodes; and
a processing circuit that determines multiple priorities of the multiple distributed nodes, assigns an overlapped part of each of multiple precoders of the multiple distributed nodes when the overlapped part is decided at the central node, and receives the signals related to a non-overlapped part of the precoders from all co-scheduled distributed nodes of the multiple distributed nodes.

**15.** The central node as claimed in claim 14, wherein the multiple precoders are under a condition of partially overlapped antenna selection, non-overlapped antenna selection, and fully overlapped antenna selection.

**16.** The central node as claimed in claim 15, wherein when the multiple precoders are under a condition of partially overlapped antenna selection, the multiple precoders include the overlapped part and a non-overlapped part.

17. The central node as claimed in claim 14, wherein one or more codebooks used for designing the multiple precoders are stored in a memory that is either an internal memory or an external memory of the central node.

18. The central node as claimed in claim 16, wherein a memory is used for storing and accessing the non-overlapped part and the overlapped part for a precoding matrix.

19. The central node as claimed in claim 14, wherein the multiple priorities are decided according to number of layers of each of the multiple distributed nodes, and a quality of service in the communication system.

20. A distributed node with an antenna selection mechanism in a communication system, and equipped with a plurality of antennas, comprising:

    a transceiver circuit for transmitting and receiving a plurality of signals to and from a central node;
    a converter configured to perform a format conversion between one or more digital signals and one or more analog signals from the distributed node to the central node or from the central node to the distributed node; and
    a processing circuit that determines an overlapped part or a non-overlapped part of a precoder for the distributed node, and receives and transmits one or more signals related to determining the precoder.

21. The distributed node as claimed in claim 20, wherein said processing circuit further feeds back a plurality of coefficients of the non-overlapped part of the precoder to the central node via the transceiver.

22. The distributed node as claimed in claim 20, wherein said processing circuit determines an overlapped part of at least one precoder for at least one distributed node having a higher priority compared with a predefined value.

23. The distributed node as claimed in claim 20, wherein a memory is used for storing and accessing the non-overlapped part and the overlapped part related to at least one precoder.

**FIG. 1**

**FIG. 2**

$$A = \begin{bmatrix} \alpha_{1,1} & \alpha_{1,2} \\ e^{j\frac{2\pi.0}{4}} & e^{j\frac{2\pi.0}{4}} \\ e^{j\frac{2\pi.0}{4}} & e^{j\frac{2\pi.1}{4}} \\ e^{j\frac{2\pi.0}{4}} & e^{j\frac{2\pi.2}{4}} \\ e^{j\frac{2\pi.0}{4}} & e^{j\frac{2\pi.3}{4}} \\ 0 & 0 \end{bmatrix}, B = \begin{bmatrix} 0 \\ e^{j\frac{2\pi.0}{4}} \\ e^{j\frac{2\pi.2}{4}} \\ e^{j\frac{2\pi.4}{4}} \\ e^{j\frac{2\pi.6}{4}} \\ b_{6,1} \end{bmatrix}$$

**FIG. 3A**

$$A = \begin{bmatrix} \alpha_{1,1} & \alpha_{1,2} \\ 1 & 1 \\ 1 & -1 \\ 1 & 1 \\ 1 & -1 \\ 0 & 0 \end{bmatrix}, B = \begin{bmatrix} 0 \\ 1 \\ 1 \\ -1 \\ -1 \\ b_{6,1} \end{bmatrix}$$

**FIG. 3B**

**FIG. 4**

SUPPORT AN ANTENNA SELECTION SCHEME
FROM THE PLURALITY OF ANTENNAS AT THE
CENTRAL NODE

510

CO-SCHEDULE THE MULTIPLE  DISTRIBUTED
NODES TO A SAME RESOURCE IN A
DOWNLINK CHANNEL FROM THE CENTRAL
NODE TO THE MULTIPLE DISTRIBUTED NODES
BY USING MULTIPLE PRECODERS RELATED
TO  MULTIPLE CO-SCHEDULED DISTRIBUTED
NODES TO PROVIDE A PERFORMANCE GAIN

520

# FIG. 5

y

**FIG. 6**

| Central node | Priority 1<br>Node 1 | Priority 2<br>Node 2 | Priority 3<br>Node 3 |
|---|---|---|---|

Feed back the selected overlapped precoder coefficients
710

Inform which precoder coefficients can (not) be used
720

Feed back the selected overlapped precoder coefficients
730

Inform the assigned overlapped precoder coefficints
740

Feed back the non-overlapped precoder coefficients
751

Feed back the non-overlapped precoder coefficients
752

Feed back the non-overlapped precoder coefficients
753

**FIG. 7**

EP 2 747 303 A1

**FIG. 8**

**FIG. 9**

**FIG. 10**

Europäisches
Patentamt

European
Patent Office

Office européen
des brevets

# EUROPEAN SEARCH REPORT

**Application Number**

EP 13 17 8626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/124290 A1 (TAO ZHIFENG [US] ET AL) 14 May 2009 (2009-05-14) | 1,13-15, 19,20, 22,23 | INV. H04B7/04 H04B7/06 |
| Y | * paragraphs [0001], [0003], [0027] - [0031], [0045]; figure 1A * | 2-7,12, 16,18,21 | |
| A | | 8-11 | |
| | ----- | | |
| X | WO 2008/152540 A2 (KONINKL PHILIPS ELECTRONICS NV [NL]; MA NI [CN]; ZHOU QI [CN]; PU SUOM) 18 December 2008 (2008-12-18) * page 1, line 14 - line 15 * * page 3, line 15 - page 4, line 4; figure 4 * * page 7, line 2 * | 1,14,15, 17,20 | |
| | ----- | | |
| Y | PHILIPS: "Codebook alphabet and PA power balance", 3GPP DRAFT; R1-103909, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 24 June 2010 (2010-06-24), XP050449509, [retrieved on 2010-06-24] * Sections 2.1 and 5A * | 2-7,12, 16,18,21 | **TECHNICAL FIELDS SEARCHED (IPC)** H04B |
| | ----- | | |

The present search report has been drawn up for all claims

| Place of search | Date of completion of the search | Examiner |
|---|---|---|
| Munich | 28 February 2014 | Sälzer, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 747 303 A1

## ANNEX TO THE EUROPEAN SEARCH REPORT
## ON EUROPEAN PATENT APPLICATION NO.

EP 13 17 8626

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2014

| Patent document cited in search report | Publication date | Patent family member(s) | Publication date |
|---|---|---|---|
| US 2009124290 A1 | 14-05-2009 | AT 508540 T | 15-05-2011 |
| | | EP 2218194 A1 | 18-08-2010 |
| | | JP 2010527165 A | 05-08-2010 |
| | | KR 20100057092 A | 28-05-2010 |
| | | US 2009124290 A1 | 14-05-2009 |
| | | WO 2009060650 A1 | 14-05-2009 |
| WO 2008152540 A2 | 18-12-2008 | TW 200901652 A | 01-01-2009 |
| | | WO 2008152540 A2 | 18-12-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61745724 B
- US 13950267 B